(19) Europäisches Patentamt
European Patent Office
Office européen des brevets

(11) **EP 0 835 022 B1**

## (12) EUROPEAN PATENT SPECIFICATION

(45) Date of publication and mention
of the grant of the patent:
**10.12.2003 Bulletin 2003/50**

(51) Int Cl.⁷: **H04N 1/327**, H04N 1/00

(21) Application number: **97203463.1**

(22) Date of filing: **05.09.1989**

(54) **Communication apparatus with standby power supply**

Übertragungsgerät mit Bereitschaftsnetzteil

Dispositif de communication avec alimentation standby

(84) Designated Contracting States:
**DE ES FR GB IT NL**

(30) Priority: **06.09.1988 JP 22390288**

(43) Date of publication of application:
**08.04.1998 Bulletin 1998/15**

(62) Document number(s) of the earlier application(s) in
accordance with Art. 76 EPC:
**89308961.5 / 0 358 441**

(73) Proprietor: **CANON KABUSHIKI KAISHA
Tokyo (JP)**

(72) Inventors:
• **Nakajima, Toshifumi
Ohta-ku, Tokyo (JP)**
• **Koizumi, Shigeru
Ohta-ku, Tokyo (JP)**
• **Kurita, Kenji
Ohta-ku, Tokyo (JP)**

• **Kurosawa, Yuji
Ohta-ku, Tokyo (JP)**

(74) Representative:
**Beresford, Keith Denis Lewis et al
BERESFORD & Co.
2-5 Warwick Court,
High Holborn
London WC1R 5DH (GB)**

(56) References cited:
**WO-A-86/02797          US-A- 4 246 634
US-A- 4 505 574          US-A- 4 647 721**

• **PATENT ABSTRACTS OF JAPAN vol. 010, no.
289 (E-442), 2 October 1986 & JP 61 106067 A
(NEC CORP), 24 May 1986**
• **J.D. HILL ET AL.: "Auto-answer communicating
typewriter with a power-saver feature" IBM
TECHNICAL DISCLOSURE BULLETIN, vol. 23,
no. 7A, 31 December 1986, pages 2886-2887,
XP002001498 New York (US)**

**Description**

BACKGROUND OF THE INVENTION:

Field of the Invention

The present invention relates to a communication apparatus and, more particularly, to power supply of a communication apparatus.

Related Background Art

A conventional communication apparatus, e. g., a facsimile apparatus is arranged as follows because the apparatus has an automatic receive function.

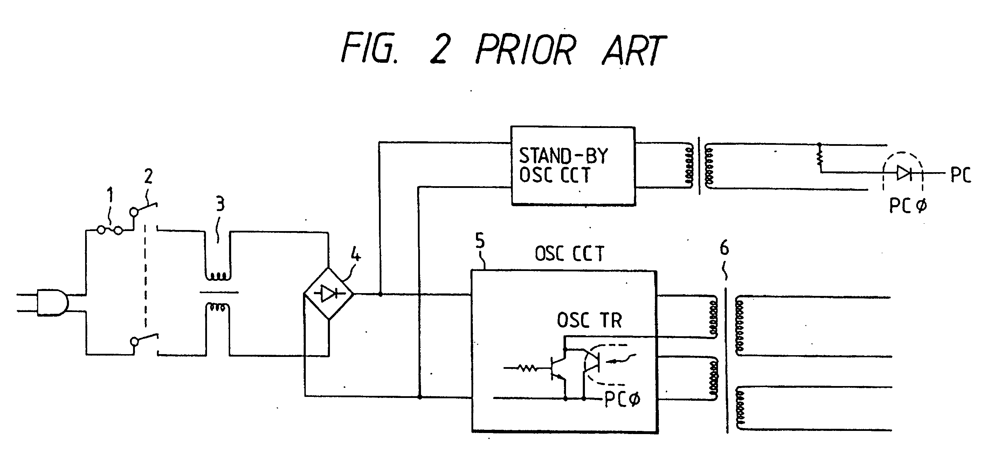

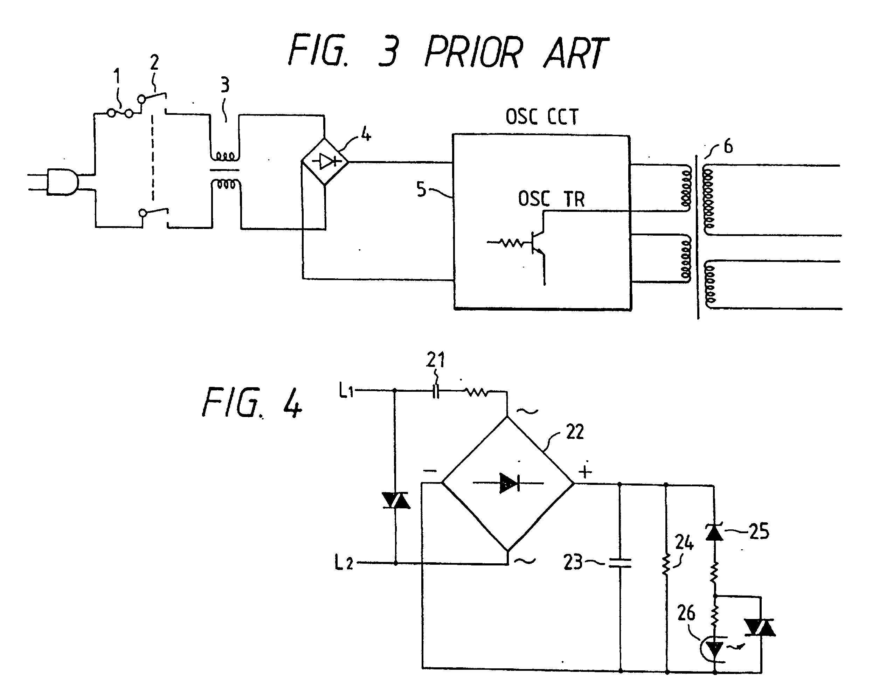

(1) A stand-by power source function is provided for a power source unit so that part of power is supplied during a wait period and total power is supplied upon automatic receive operation (as in a middle- or high-class machine shown in Fig. 2).
(2) Total power is normally supplied from a power source unit (as in a lower-class machine shown in Fig. 3).

In the apparatus of item (1) described above, however, an arrangement of the power source unit is complicated, and the manufacturing cost is increased.

In the apparatus of item (2), although an arrangement of the power source unit is simplified and the manufacturing cost is low, power consumption during a stand-by period is increased. In addition, this apparatus has problems of heat dissipation and safety during the stand-by period.

US-A-4647721, WO-A-86/02797 and IBM Technical Disclosure Bulletin Vol. 23 No. 7A pp 2886 and 2887 propose arrangements in which the AC power to a computer and a modem or to a communicating typewriter is connected by closure of a relay in response to detecting an incoming call. In US-A-4647721 and WO-A-86/02797 the relay switches the AC power directly. In the IBM Technical Disclosure proposal the AC power is switched by a triac, and the relay provides trigger current to the triac.

US-A-4727576 discloses a facsimile apparatus having a main power supply and a stand-by power supply. An automatic reception detection circuit, a hook-up detection circuit, an original detection circuit, and a start button detection circuit are powered by the stand-by power supply, as are an AND and an OR circuit..Two timer circuits, an original feed circuit, a fluorescent lamp, and a control circuit (including a micro processor) are powered by the main power supply. The hook-up detection circuit and the original detection circuit are connected to the AND circuit to provide a signal if the operator lifts the receiver of a telephone and also an original is detected. The AND circuit, the automatic reception detection circuit and the start button detection circuit all provide outputs to the OR circuit, and in the event that a signal is received by the OR circuit from any of them, the OR circuit outputs a signal to turn on the main power supply. The control circuit also provides an output to the OR circuit, so that once the main power supply has been turned on and the control circuit has begun to operate, it is able to keep the main power supply on independently of the other inputs to the OR circuit.

SUMMARY OF THE INVENTION

According to the present invention there is provided communication apparatus as set out in claim 1. The remaining claims set out optional features.
An embodiment of the invention provides a communication apparatus which does not consume much power during a stand-by period of the apparatus.
An embodiment of the present invention provides a communication apparatus which starts power supply in accordance with external conditions such as reception of a calling signal or an operation start instruction and stops power supply upon completion of an operation.
An embodiment of the present invention provides a communication apparatus which starts oscillation of an oscillation power source circuit in accordance with the external conditions as described above and stops oscillation of the power source circuit upon completion of an operation.
Embodiments of the invention will now be described by way of example only, with reference to the accompanying drawings in which:

BRIEF DESCRIPTION OF THE DRAWINGS

Fig. 1 is a block diagram showing an arrangement of a first embodiment of the present invention;
Fig. 2 is a block diagram showing an arrangement of the conventional apparatus (1) ;
Fig. 3 is a block diagram showing an arrangement of the conventional apparatus (2) ;
Fig. 4 is a circuit diagram showing an arrangement of a shaping circuit of the first embodiment;
Fig. 5 is a flow chart for explaining a control operation of a CPU of the first embodiment;
Fig. 6 is a block diagram showing an arrangement of a second embodiment of the present invention;
Fig. 7 is a flow chart for explaining a control operation of a CPU of the second embodiment;
Fig. 8 is cancelled;
Fig. 9 is a block diagram showing an arrangement of a third embodiment of the present invention; and
Fig. 10, consisting of Figs. 10A and 10B is a flow chart for explaining a control operation of a CPU of the third embodiment.

## DETAILED DESCRIPTION OF THE PREFERRED EMBODIMENTS

Preferred embodiments of the present invention will be described in detail below with reference to the accompanying drawings.

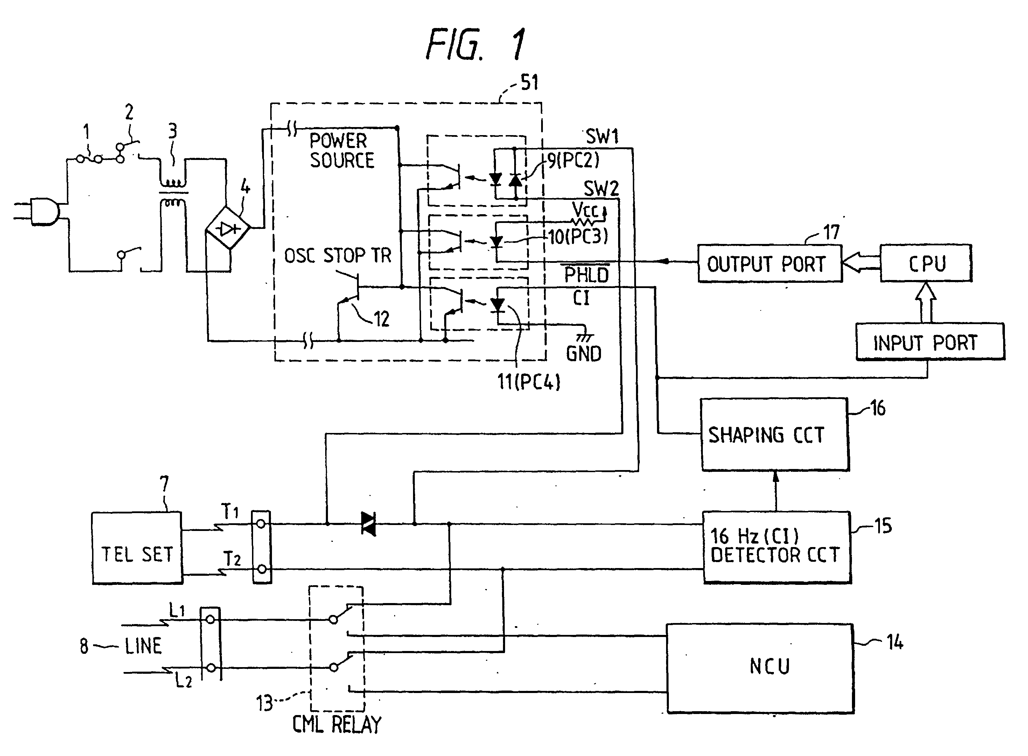

Fig. 1 is a block diagram showing an arrangement of the first embodiment. Referring to Fig. 1, a fuse 1 for preventing an overcurrent, a power source switch 2, a line filter 3, and a rectifier circuit 4 are connected to an oscillation circuit 51. A telephone set 7 and a line 8 are also included in the apparatus. A transistor 12 for controlling an oscillation operation is normally ON to stop oscillation of the oscillation circuit 51 of a power source. When oscillation of the oscillation circuit 51 is stopped, no power is supplied to the apparatus. Photocouplers 9, 10, and 11 ON/OFF-control the oscillation stop transistor 12. A light-emitting portion of the photocoupler 9 (PC2) includes bidirectional photodiodes and is connected in series with one of lines L1 and L2.

When the line is open, no current flows through the light-emitting portion of the PC2. When a handset of the telephone set 7 is taken from the hook to close the line, however, a DC loop is formed, and the light-emitting portion of the PC2 emits light to turn off the oscillation stop transistor 12, thereby starting oscillation. A signal $\overline{PHLD}$ is supplied from an I/O port 17 of a control unit (CPU) of a main body of a facsimile apparatus. That is, the signal $\overline{PHLD}$ is generated under the control of the CPU (comprising a microcomputer) which is activated immediately after the power source is enabled. This signal is active at low level ("0" level). When a signal $\overline{PHLD}$ is at low level, the oscillation stop transistor 12 is held off, and oscillation is maintained. When a calling signal (16 Hz) is sent from the line, a light-emitting portion of the photocoupler 11 (PC4) emits light to turn off the oscillation stop transistor 12, thereby starting oscillation. The communication apparatus also includes a 16-Hz (CI) detector circuit 15 and a shaping circuit 16 for integrating a signal CI and supplying a current to the light-emitting portion of the photocoupler 11 (PC4) for a predetermined time. A network control unit (NCU) 14 controls a network of the communication apparatus.

Fig. 4 is a circuit diagram showing the shaping circuit 16 shown in Fig. 1. The shaping circuit 16 comprises a DC cut capacitor 21, a rectifier circuit 22, a smoothing capacitor 23, and a resistor 24 having a large resistance for discharging the capacitor 23, a Zener diode 25 for identifying the signal CI (calling signal), and a light-emitting portion 26 of the photocoupler 10 (PC3) shown in Fig. 1. A signal which responds to the signal CI (16 Hz) is obtained by integrating the CI by these circuits.

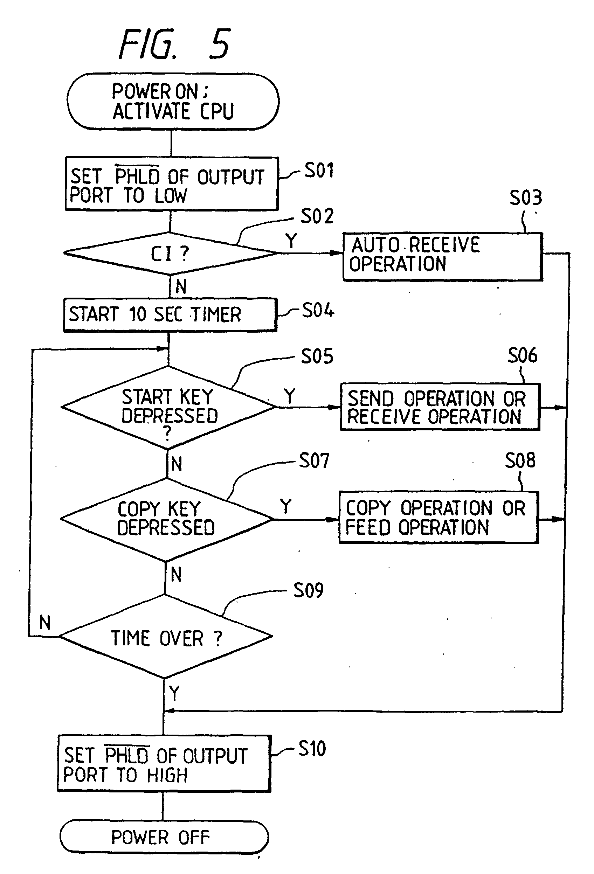

An operation of the first embodiment will be described below with reference to a flow chart shown in Fig. 5. When oscillation of the power source is started to activate the CPU of the communication apparatus, the signal $\overline{PHLD}$ from the OUT port 17 is fixed at low level to continue oscillation of the power source in step S01. In step S02, the CPU checks in accordance with a signal from the 16-Hz detector circuit 15 whether the signal CI (16 Hz) is sent. If the signal CI is detected in step S02, the flow advances to an automatic receive operation in step S03. If the signal CI is not sent, a 10-sec timer is started in step S04, and the CPU checks in step S05 whether a start key (not shown) is depressed. If the start key is depressed, the flow advances to a send or receive operation in accordance with the presence/absence of an original sheet. If the start key is not depressed, depression of a copy key (not shown) is checked in step S07. If the copy key is depressed, the flow advances to a copy or feed operation in accordance with the presence/absence of an original sheet in step S08. If the copy key is not depressed, time over of ten seconds is checked in step S09. If time over is not determined, the flow returns to step S05. If time over is determined, the signal $\overline{PHLD}$ from the OUT port 17 is set at high level in step S10. As a result, oscillation of the oscillation circuit 51 of the power source is stopped; and power supply to the communication apparatus is stopped accordingly. Note that after the operation is completed in step S03, S06, or S08, the signal $\overline{PHLD}$ is set at high level in step S10, and the power source is disabled.

That is, in accordance with external conditions such as reception of a calling signal or off-hook of the telephone set 7, the transistor 12 is turned off, the oscillation circuit 51 of the power source unit starts oscillation to supply power to the apparatus. When a communication or copy operation is completed, the transistor 12 is turned on to stop oscillation of the oscillation circuit, thereby stopping power supply.

A second embodiment of the present invention will be described below.

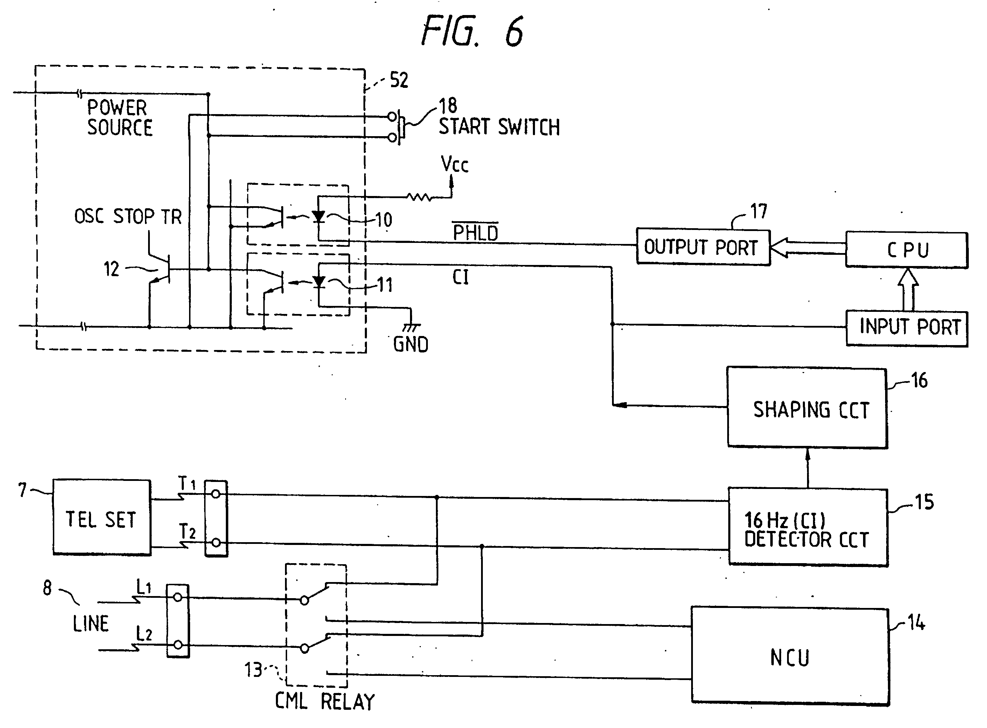

Fig. 6 is a block diagram showing an arrangement of the second embodiment different from the first embodiment in an arrangement after an oscillation circuit 52. Referring to Fig. 6, a start switch 18 is mechanically arranged. Note that this switch automatically returns (opens) when a predetermined time elapses after it is depressed. When a user depresses the start switch 18 of the communication apparatus, an oscillation stop transistor 12 is turned off to start oscillation.

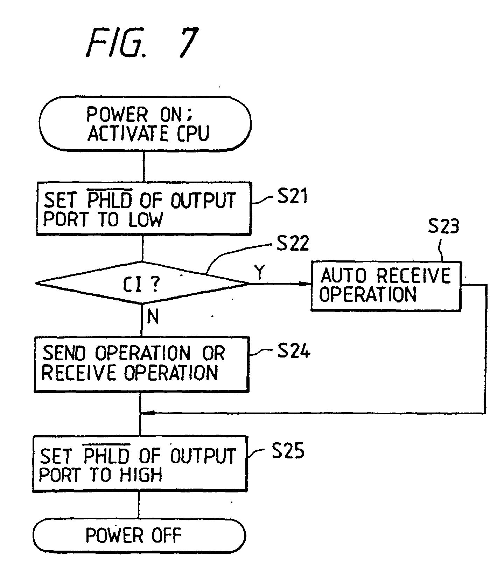

Fig. 7 is a flow chart for explaining a control operation of a CPU of the second embodiment. Referring to the flow chart shown in Fig. 7, in step S21, after the CPU is activated, it fixes a signal $\overline{PHLD}$ at an output port to low level to continue oscillation. In step S22, the CPU checks whether a signal CI is sent or not. If the signal CI is detected, the flow advances to an automatic receive operation in step S23. If the signal CI is not detected, a send or receive operation is performed in step S24 in accordance with the presence/absence of a original sheet. After these operations are completed, the signal $\overline{PHLD}$ is set at high level to stop oscillation in step S25.

Another power source circuit system for reducing power consumption during a stand-by period to substantially "0" will be described below.

In the embodiments, a switching power source is used as the power source.

The third embodiment of the present invention will be described below.

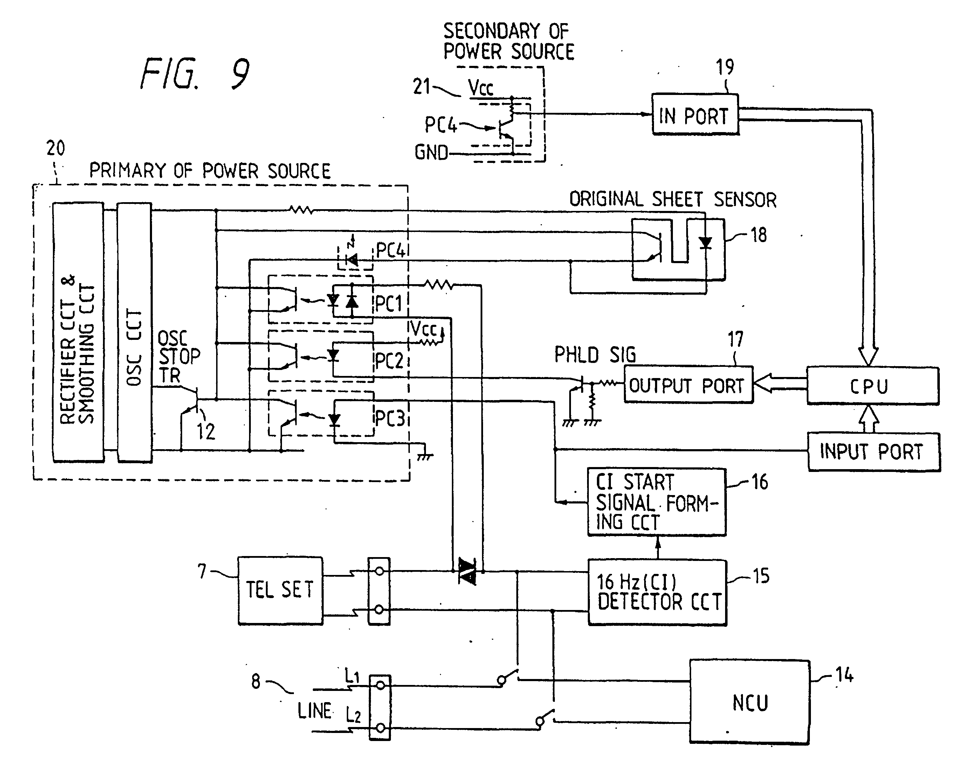

Fig. 9 is a block diagram showing an arrangement of the third embodiment.

Note that in Fig. 9, the same reference numerals as in Fig. 1 denote the same parts. Referring to Fig. 9, an original sheet sensor 18 supplies a current of several mA from the primary side of a power source to a light-emitting portion of a photointerruptor and starts oscillation of the power source in accordance with the presence/absence of an original sheet. A circuit 21 supplies information representing that the power source is caused to start oscillation by the original sheet sensor from the secondary side of the power source to a CPU. An IN port 19 receives this information signal. When a handset of a telephone set is taken from the hook to connect a DC loop, the power source detects this by a PC1 and starts oscillation. In this manner, an on-hook operation of oscillation of the power source is controlled by three photocouplers PC1, PC2, and PC3 and the photointerruptor (original sheet sensor) 18.

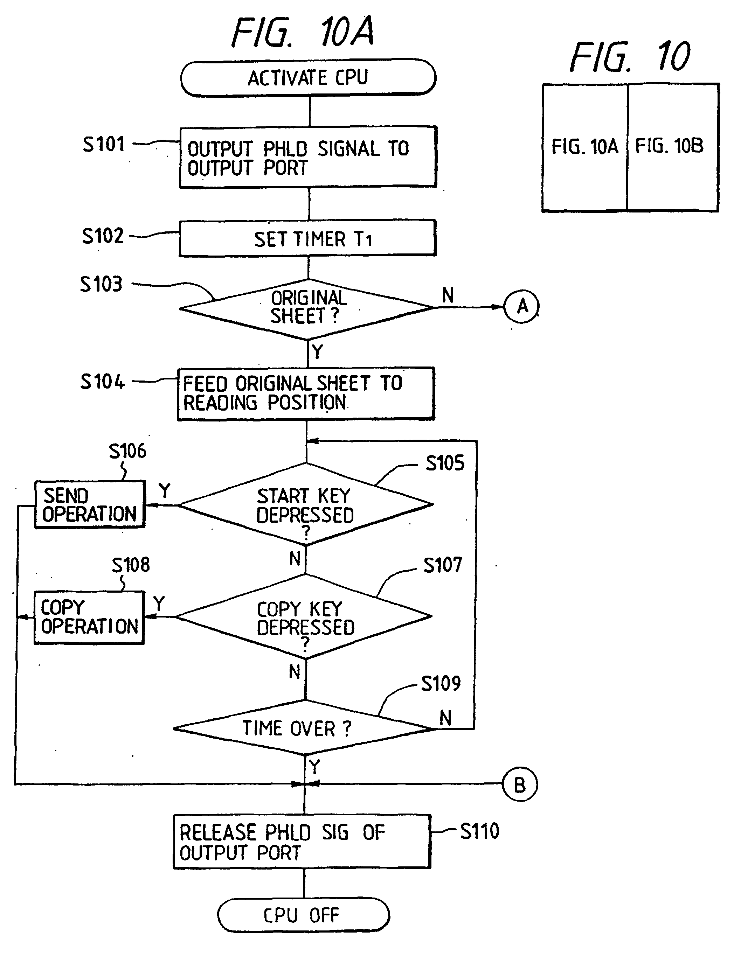

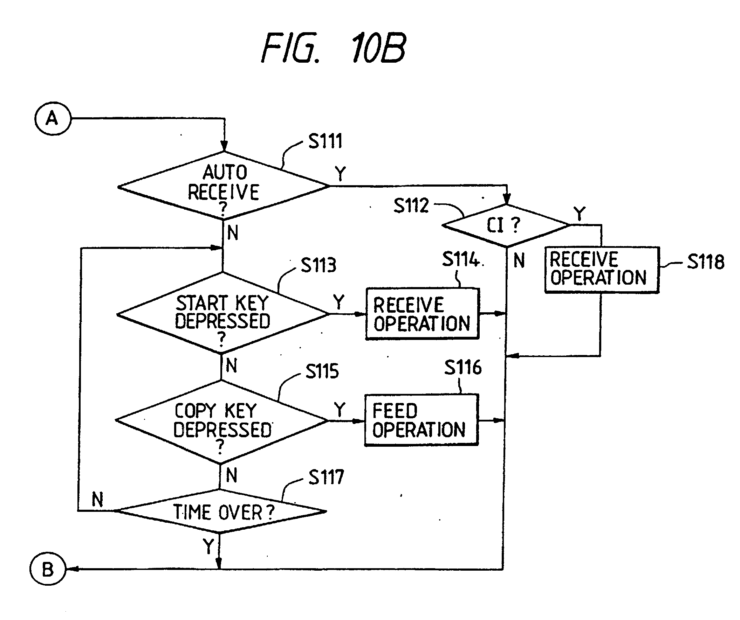

An operation of the CPU of the communication apparatus using the above power source will be described below with reference to a flow chart shown in Fig. 10.

When the CPU is activated, it outputs an active signal PHLD from an output port 17 in step S101. Therefore, oscillation of the power source is continued. In step S102, the CPU sets a predetermined value (e.g., 60 seconds), in a timer T1. This value is set in order to turn off oscillation of the power source upon time over. In step S103, in accordance with a signal supplied from the PC4 of the power source to the IN port 19 via the secondary circuit 21, the CPU checks whether an original sheet is present. If an original sheet is present, the flow advances to step S104. If an original sheet is not present, the flow advances to step S111. In step S104, the original sheet is fed to a reading position, and a routine loop for detecting start key depression, copy key depression, and time over in steps S105, S107, and S109, respectively, is performed. If start key depression is detected, a send operation is performed in step S106. After the send operation is completed, the signal PHLD at the OUT port is released, the power source stops oscillation, and the CPU stops an operation. Similarly, if copy key depression is detected, a copy operation is performed in step S108, and the signal PHLD is released in step S110. If time over is detected, the CPU similarly releases the signal PHLD in step S110 and stops an operation. If an original sheet is not present in step S103, the flow advances to step S112 when an automatic receive/manual receive switch on an operation panel is set to the automatic receive side; advances to step S113 when it is set to the manual receive side. In step S112, the CPU checks by the CI detector circuit 15 shown in Fig. 9 whether a signal CI is supplied. If the signal CI is detected, the flow advances to an automatic receive operation in step S118. If no signal CI is detected, the CPU determines that the input signal is noise, and the flow advances to step S110. If the switch on the opera tion panel is set to the manual receive side, a routine loop of detecting start key depression, copy key depression, and time over in steps S113, S115, and S117, respectively, is performed. If start key depression is detected, a receive operation is performed in step S114. After the receive operation is completed, the flow advances to step S110. Similarly, if time over is detected in step S117, the' flow advances to step S110.

As has been described above, according to the present embodiments, power consumption is reduced during a stand-by period by stopping oscillation of a power source during the stand-by period. In addition, since an apparatus is activated in accordance with a manual/automatic activation factor, a communication apparatus having a stand-by function can be realized at lower cost with a smaller size than those of conventional apparatuses can be realized.

In the above embodiments, the present invention is applied to a facsimile apparatus. The present invention, however, is not limited to a facsimile apparatus but can be widely applied to various communication apparatuses such as an automatic answering telephone set and a teletex apparatus.

In addition, the present invention is not limited to the above embodiments but can be variously modified.

As described above, according to the present embodiments, there is provided a communication apparatus which is simple in arrangement and consumes less power in a stand-by period

**Claims**

1. Communication apparatus comprising:

a switching power supply, comprising a rectifier (4) and an oscillation circuit (51,52) downstream of the rectifier (4), for receiving a power input and providing a power output to other. parts of the apparatus while the oscillation circuit is oscillating, so that no power is supplied to the remainder of the apparatus when the oscillation circuit is stopped;
detection means (7, 15, 16, 18) for detecting an external condition; and
communication means (NCU 14, CPU) for conducting a communication operation, the communication means comprising a control CPU receiving power output by the switching power supply thereby to be activated when the oscillation of the oscillation circuit is started,

**characterised in that** the switching power supply comprises inhibition means (12, PC1, PC2, PC3, PC4) downstream of the rectifier (4), for inhibiting the oscillation circuit from oscillating and for withdrawing the inhibition in response to the detection means detecting an external condition to allow the oscillation circuit to oscillate, and the communication means is coupled to the inhibition means to maintain the withdrawal of the inhibition until the communication operation is completed.

2. Apparatus according to claim 1 in which the inhibition means comprises connection means (12) to connect a part of the oscillation circuit to a line carrying an output from the rectifier (4) to inhibit oscillation of the oscillation circuit, withdrawal means to break the connection to withdraw the inhibition in response to the detection means, and further means to keep the connection broken to maintain the withdrawal of the inhibition in response to a signal from the communication means.

3. Apparatus according to claim 1 in which the inhibition means comprises a transistor (12) which is normally conductive to inhibit oscillation of the oscillation circuit, withdrawal means to turn off the transistor (12) to withdraw the inhibition in response to the detection means, and further means to keep the transistor (12) turned off to maintain the withdrawal of the inhibition in response to a signal from the communication means.

4. Apparatus according to claim 2 or claim 3 in which the withdrawal means comprises a photocoupler which becomes conductive in response to a detection output from the detection means.

5. Apparatus according to one any of claims 2 to 4 in which the further means comprises a photocoupler which becomes conductive in response to the said signal from the communication means.

6. Apparatus according to any one of the preceding claims in which the detection means provides a detection output in response to reception of a calling signal from a calling party as an external condition.

7. Apparatus according to claim 6 which is for connection to a communication line (8) in use, and in which the detection means (15,16) provides power from the line (8) to the inhibition means when a calling signal is received.

8. Apparatus according to any one of the preceding claims, in which the detection means provides a detection output in response to an associated telephone set (7) going off-hook as an external condition.

9. Apparatus according to claim 8 which is for connection to a communication line (8) in use, and in which the detection means provides power from the line (8) to the inhibition means when the telephone set (7) goes off-hook.

10. Apparatus according to any one of the preceding claims in which the detection means comprises a start switch and the external condition comprises actuation of the start switch.

11. Apparatus according to any one of the preceding claims in which the detection means comprises an original sheet sensor connected to receive power even when the oscillation circuit is not oscillating, and the external condition comprises sensing the insertion of an original sheet into the apparatus.

12. Apparatus according to any one of the preceding claims which is facsimile apparatus.

13. Apparatus according to any one of claims 1 to 10 which is teletex apparatus.

14. Apparatus according to any one of claims 1 to 7 which is an automatic answering telephone set.

**Patentansprüche**

1. Übertragungsgerät mit

    einer Schaltenergieversorgung mit einem Gleichrichter (**4**) und einer Oszillationsschaltung (**51, 52**) hinter dem Gleichrichter (**4**), zum Empfang einer Energieeingabe und zur Bereitstellung einer Energieabgabe an andere Teile des Geräts, während die Oszillationsschaltung oszilliert, so dass keine Energie dem restlichen Gerät zugeführt wird, wenn die Oszillation gestoppt wird,

    einer Erfassungseinrichtung (**7, 15, 16, 18**) zur Erfassung einer äußeren Bedingung, und

    einer Übertragungseinrichtung (**NCU 14, CPU**) zur Durchführung eines Übertragungsvorgangs, wobei die Übertragungseinrichtung eine Steuerungs-CPU aufweist, die eine Energieabgabe von der Schaltenergieversorgung zur Aktivierung empfängt, wenn die Oszillation der Oszillationsschaltung gestartet wird,

    **dadurch gekennzeichnet, dass**

    die Schaltenergieversorgung eine Blockiereinrichtung (**12, PC1, PC2, PC3, PC4**) hinter dem Gleichrichter (**4**) aufweist, um die Oszillation der Oszillationsschaltung zu blockieren, und um das Blockieren im Ansprechen darauf zurückzuziehen, dass die Erfassungseinrichtung eine äußere Bedingung erfasst, um eine Oszillation der Oszillationsschaltung zu ermöglichen, und die Übertragungseinrichtung mit der Blockiereinrichtung gekoppelt ist, um das Zurückziehen der Blockierung bis zum Abschluss des Übertragungsvorgangs beizubehalten.

2. Gerät nach Anspruch 1, wobei die Blockiereinrichtung eine Verbindungseinrichtung (**12**) zur Verbindung eines Teils der Oszillationsschaltung mit einer Leitung, die einen Ausgang aus dem Gleichrichter (**4**) führt, um die Oszillation der Oszillationsschaltung zu blockieren, eine Zurückziehungseinrichtung zur Unterbrechung der Verbindung, um das Blockieren im Ansprechen auf die Erfassungseinrichtung zurückzuziehen, und eine weitere Einrichtung aufweist, um die Verbindung unterbrochen zu halten, so dass das Zurückziehen der Blockierung im Ansprechen auf ein Signal aus der Übertragungseinrichtung beibehalten wird.

3. Gerät nach Anspruch 1, wobei die Blockiereinrichtung einen Transistor (**12**), der normalerweise leitend ist, um die Oszillation der Oszillationsschaltung zu blockieren, eine Zurückziehungseinrichtung zum Ausschalten des Transistors (**12**), um die Blockierung im Ansprechen auf die Erfassungseinrichtung zurückzuziehen, und weiterhin eine Einrichtung aufweist, um den Transistor (**12**) ausgeschaltet zu halten, um das Zurückziehen der Blockierung im Ansprechen auf ein Signal aus der Übertragungseinrichtung beizubehalten.

4. Gerät nach Anspruch 2 oder 3, wobei die Zurückziehungseinrichtung einen Photokoppler aufweist, der im Ansprechen auf einen Erfassungsausgang aus der Erfassungseinrichtung leitend wird.

5. Gerät nach einem der Ansprüche 2 bis 4, wobei die weitere Einrichtung einen Photokoppler aufweist, der im Ansprechen auf das Signal aus der Übertragungseinrichtung leitend wird.

6. Gerät nach einem der vorhergehenden Ansprüche, wobei die Erfassungseinrichtung einen Erfassungsausgang im Ansprechen auf den Empfang eines Rufsignals von einem rufenden Teilnehmer als eine äußere Bedingung bereitstellt.

7. Gerät nach Anspruch 6, das für einen Verbindung zu einer Übertragungsleitung (**8**) verwendet wird, und wobei die Erfassungseinrichtung (**15, 16**) Energie aus der Leitung (**8**) zu der Blockiereinrichtung bereitstellt, wenn das Rufsignal empfangen wird.

8. Gerät nach einem der vorhergehenden Ansprüche, wobei die Erfassungseinrichtung einen Erfassungsausgang im Ansprechen auf einen ausgehängten Zustand eines zugehörigen Telefonsets (**7**) als eine äußere Bedingung bereitstellt.

9. Gerät nach Anspruch 8, der für eine Verbindung zu einer Übertragungsleitung (**8**) verwendet wird, wobei die Erfassungseinrichtung Energie aus der Leitung (8) zu der Blockiereinrichtung bereitstellt, wenn das Telefonset (**7**) ausgehängt wird.

10. Gerät nach einem der vorhergehenden Ansprüche, wobei die Erfassungseinrichtung einen Startschalter aufweist, und die äußere Bedingung die Betätigung des Startschalters aufweist.

11. Gerät nach einem der vorhergehenden Ansprüche, wobei die Erfassungseinrichtung einen Originalblattsensor aufweist, der angeschlossen ist, um Energie zu empfangen, selbst wenn die Oszillationsschaltung nicht oszilliert, und die externe Bedingung das Erfassen eines Einfügens eines Originalblatts in das Gerät aufweist.

12. Gerät nach einem der vorhergehenden Ansprüche, wobei dieses ein FaxgeräL ist.

13. Gerät nach einem der Ansprüche 1 bis 10, wobei dieses ein Teletextgerät ist.

14. Gerät nach einem der Ansprüche 1 bis 7, wobei dieses ein Telefonset mit automatischem Anrufbeantworter ist.

**Revendications**

1. Appareil de communication comportant :

une alimentation en énergie à commutation, comportant un redresseur (4) et un circuit oscillant (51, 52) en aval du redresseur (4), pour recevoir de l'énergie d'entrée et fournir de l'énergie de sortie à d'autres parties de l'appareil tandis que le circuit oscillant oscille, de manière qu'aucune énergie ne soit fournie à la partie restante de l'appareil lorsque le circuit oscillant est arrêté ;
un moyen de détection (7, 15, 16, 18) destiné à détecter un état extérieur ; et
un moyen de communication (NCU 14, CPU) pour l'exécution d'une opération de communication, au moyen de communication comportant une unité CPU de commande recevant de l'énergie de sortie par l'alimentation en énergie à commutation, de façon à être activée lorsque l'oscillation du circuit oscillant est amorcée,

**caractérisé en ce que** l'alimentation en énergie à commutation comporte un moyen d'inhibition (12, PC1, PC2, PC3, PC4) en aval du redresseur (4), pour empêcher le circuit oscillant d'osciller et pour supprimer l'empêchement en réponse à la détection par le moyen de détection d'un état extérieur permettant au circuit oscillant d'osciller, et le moyen de communication est couplé au moyen d'empêchement afin de maintenir la suppression de l'empêchement jusqu'à ce que l'opération de communication soit achevée.

2. Appareil selon la revendication 1, dans lequel le moyen d'empêchement comporte un moyen de connexion (12) destiné à connecter une partie du circuit oscillant à une ligne parcourue par un signal de sortie du redresseur (4) pour empêcher l'oscillation du circuit oscillant, un moyen de suppression destiné à rompre la connexion pour supprimer l'empêchement en réponse au moyen de détection, et en outre un moyen pour maintenir la connexion rompue afin de maintenir la suppression de l'empêchement en réponse à un signal provenant du moyen de communication.

3. Appareil selon la revendication 1, dans lequel le moyen d'empêchement comporte un transistor (12) qui est normalement conducteur pour empêcher l'oscillation du circuit oscillant, un moyen de suppression pour bloquer le transistor (12) afin de supprimer l'empêchement en réponse au moyen de détection, et en outre un moyen pour maintenir le transistor (12) dans l'état bloqué afin de maintenir la suppression de l'empêchement en réponse à un signal provenant du moyen de communication.

4. Appareil selon la revendication 2 ou la revendication 3, dans lequel le moyen de suppression comporte un photocoupleur qui devient conducteur en réponse à un signal de sortie de détection provenant du moyen de détection.

5. Appareil selon l'une quelconque des revendications 2 à 4, dans lequel l'autre moyen comporte un photocoupleur qui devient conducteur en réponse audit signal provenant du moyen de communication.

6. Appareil selon l'une quelconque des revendications précédentes, dans lequel le moyen de détection produit un signal de sortie de détection en réponse à la réception d'un signal d'appel provenant d'une partie appelante en tant qu'état extérieur.

7. Appareil selon la revendication 6, qui est destiné à une connexion à une ligne (8) de communication lors de l'utilisation, et dans lequel le moyen de détection (15, 16) fournit de l'énergie provenant de la ligne (8) au moyen d'empêchement lorsqu'un signal appelant est reçu.

8. Appareil selon l'une quelconque des revendications précédentes, dans lequel le moyen de détection en réponse à une action de décrochage d'un combiné téléphonique associé (7) en tant que condition extérieure.

9. Appareil selon la revendication 8, qui est destiné à une connexion à une ligne (8) de communication lors de l'utilisation, et dans lequel le moyen de détection fournit de l'énergie depuis la ligne (8) au moyen d'empêchement au moment où le combiné téléphonique (7) est décroché.

10. Appareil selon l'une quelconque des revendications précédentes, dans lequel le moyen de détection comporte un commutateur de départ et la condition extérieure comprend l'actionnement du commutateur de départ.

11. Appareil selon l'une quelconque des revendications précédentes, dans lequel le moyen de détection comporte un capteur de feuilles originales connecté de façon à recevoir de l'énergie même lorsque le circuit oscillant n'oscille pas, et la condition extérieure comprend le fait de capter l'introduction d'une feuille originale dans l'appareil.

12. Appareil selon l'une quelconque des revendications précédentes, qui est un appareil de télécopie.

13. Appareil selon l'une quelconque des revendications 1 à 10, qui est un appareil de télétex.

14. Appareil selon l'une quelconque des revendications 1 à 7, qui est un poste téléphonique à répondeur automatique.

FIG. 1

POWER SOURCE

OSC STOP TR

SW1
SW2

9(PC2)
10(PC3)
11(PC4)

Vcc

PHLD
CI

GND

OUTPUT PORT

CPU

INPUT PORT

SHAPING CCT

16

16 Hz(CI)
DETECTOR CCT

15

TEL SET

T1
T2

NCU

L1
LINE
L2

CML RELAY

EP 0 835 022 B1

FIG. 2 PRIOR ART

EP 0 835 022 B1

FIG. 3 PRIOR ART

FIG. 4

EP 0 835 022 B1

## FIG. 5

```
        ┌──────────────────────┐
        │    POWER ON ;         │
        │   ACTIVATE CPU        │
        └──────────┬───────────┘
                   │
        ┌──────────┴───────────┐
        │ SET PHLD OF OUTPUT   │──── S01
        │ PORT TO LOW          │
        └──────────┬───────────┘
                   │                                    S03
        ┌──────────┴──────┐ S02      Y    ┌─────────────────────┐
        ⟨      CI ?       ⟩─────────────▶│ AUTO RECEIVE        │────┐
        └────────┬────────┘               │ OPERATION           │    │
                 │ N                       └─────────────────────┘    │
        ┌────────┴───────────┐                                        │
        │ START 10 SEC TIMER │──── S04                                │
        └────────┬───────────┘                                        │
                 │◀──────────────────┐                                │
        ┌────────┴────────┐ S05      │  Y   ┌──────────────────────┐  │
        ⟨   START KEY     ⟩──────────┼────▶│ SEND OPERATION OR    │──┤
        ⟨   DEPRESSED     ⟩          │      │ RECEIVE OPERATION    │  │
        ⟨      ?          ⟩          │      └──────────────────────┘  │
        └────────┬────────┘          │                                │
                 │ N   S07           │  Y   ┌──────────────────────┐  │
        ┌────────┴────────┐          │      │ COPY OPERATION OR    │  │
        ⟨   COPY KEY      ⟩──────────┼────▶│ FEED OPERATION       │──┤
        ⟨   DEPRESSED     ⟩          │      └──────────────────────┘  │
        └────────┬────────┘          │            S08                 │
                 │ N                 │                                │
        ┌────────┴────────┐ S09      │ N                              │
     N  ⟨   TIME OVER ?   ⟩──────────┘                                │
     ┌──└────────┬────────┘                                           │
     │           │ Y                                                  │
     │           │◀───────────────────────────────────────────────────┘
     │  ┌────────┴───────────┐
     │  │ SET PHLD OF OUTPUT │──── S10
     │  │ PORT TO HIGH       │
     │  └────────┬───────────┘
     │  ┌────────┴────────┐
     │  │   POWER OFF     │
     │  └─────────────────┘
```

11

# FIG. 6

POWER SOURCE

52

18 START SWITCH

Vcc

OSC STOP TR

10

PHLD

CI

12

11

GND

OUTPUT PORT 17

CPU

INPUT PORT

SHAPING CCT 16

7 TEL SET

T1

T2

16 Hz (CI) DETECTOR CCT 15

8 LINE

L1

L2

13 CML RELAY

NCU 14

EP 0 835 022 B1

## FIG. 7

```
        ┌──────────────────────┐
        │     POWER ON;        │
        │    ACTIVATE CPU      │
        └──────────────────────┘
                   │
        ┌──────────────────────┐
        │ SET PHLD OF OUTPUT   │─── S21
        │ PORT TO LOW          │
        └──────────────────────┘
                   │                        S23
                   │         ┌──── S22        │
              ╱────┴────╲   Y     ┌──────────────────┐
             ╱    CI ?   ╲───────▶│ AUTO RECEIVE     │
             ╲          ╱         │ OPERATION        │
              ╲────┬───╱          └──────────────────┘
                   │ N                      │
        ┌──────────────────────┐           │
        │ SEND OPERATION OR    │─── S24     │
        │ RECEIVE OPERATION    │           │
        └──────────────────────┘           │
                   │◀──────────────────────┘
        ┌──────────────────────┐
        │ SET PHLD OF OUTPUT   │─── S25
        │ PORT TO HIGH         │
        └──────────────────────┘
                   │
        ┌──────────────────────┐
        │      POWER OFF       │
        └──────────────────────┘
```

FIG. 9

SECONDARY OF
POWER SOURCE

21 — Vcc

PC4

GND

19

IN PORT

20

PRIMARY OF POWER SOURCE

RECTIFIER CCT & SMOOTHING CCT

OSC CCT

OSC STOP TR

12

ORIGINAL SHEET SENSOR

18

PC4

PC1

PC2

Vcc

PC3

PHLD SIG

17

OUTPUT PORT

CPU

INPUT PORT

CI START SIGNAL FORM-ING CCT — 16

7 — TEL SET

16 Hz (CI) DETECTOR CCT — 15

8 — L1
LINE L2

NCU — 14

EP 0 835 022 B1

# FIG. 10A

## FIG. 10

| | |
|---|---|
| FIG. 10A | FIG. 10B |

ACTIVATE CPU

S101 — OUTPUT PHLD SIGNAL TO OUTPUT PORT

S102 — SET TIMER T1

S103 — ORIGINAL SHEET ? —N→ (A)

Y

S104 — FEED ORIGINAL SHEET TO READING POSITION

S106
SEND OPERATION ←Y— S105 START KEY DEPRESSED ?

N

S108
COPY OPERATION ←Y— S107 COPY KEY DEPRESSED ?

N

S109 TIME OVER ? —N→

Y

(B)

RELEASE PHLD SIG OF OUTPUT PORT —S110

CPU OFF

15

# FIG. 10B